Europäisches Patentamt

European Patent Office

Office européen des brevets

(11) Publication number: 0 260 803
A2

# (12) EUROPEAN PATENT APPLICATION

(21) Application number: 87306983.5

(22) Date of filing: 06.08.87

(51) Int. Cl.4: B01D 3/00

(30) Priority: 23.08.86 GB 8620544

(43) Date of publication of application:
23.03.88 Bulletin 88/12

(84) Designated Contracting States:
DE FR GB IT

(71) Applicant: Kerry Ultrasonics Limited
Hunting Gate Wilbury Way
Hitchin Hertfordshire SG4 0TQ(GB)

(72) Inventor: Lewis, John c/o Thermo Technic
Limited
Unit B Mochdre Industrial Estate
Newtown Powys Wales(GB)

(74) Representative: Greene-Kelly, James Patrick
et al
Marks & Clerk 57-60 Lincoln's Inn Fields
London WC2A 3LS(GB)

(54) Solvent cleaning apparatus.

(57) Solvent vapour cleaning apparatus having a container for solvent in which solvent is heated to effect vaporisation thereof during an operation mode of the apparatus is disclosed, which includes cooler means (3) for effecting cooling of the solvent in said container during a shut-down mode of the apparatus following heating of the solvent during the operating mode. In a preferred embodiment, heating of the solvent is effected by means of a heat pump (1, 3, 4, 5, 7, 8, 9), cooling of the solvent in the shut-down mode being effected by converting heater means (3) of the heat pump into the cooler means (3) by changing the flow of heat transfer medium within the pump. This dual functioning of the heater means (3) of the heat pump as cooler means (3) during shut-down may be effected using values (2, 6, 10, 11) which change the flow path of the heat transfer medium.

## SOLVENT VAPOUR CLEANING APPARATUS

This invention concerns solvent cleaning apparatus of the type having a container for solvent which is heated to effect vaporisation of the solvent, the apparatus also having a condenser for condensing solvent vapour and returning it to the container.

Solvent cleaning apparatus of this type is usually provided with a heat pump which supplies heat energy to the solvent in the container and removes heat energy from vaporised solvent to effect condensation of solvent vapour. In one prior art embodiment, the heat pump includes a compressor for compressing and heating a heat transfer medium, for example a fluorinated hydrocarbon, heating coils in the container for receiving heated heat transfer medium and heating the solvent therein, a restrictor for reducing the pressure of the heat transfer medium thereby to cool it, and reflux coils connected to receive cooled heat transfer medium from the restrictor and thereby to cool and condense solvent vapour. Heat transfer medium is then cycled to the compressor for compression and further heating.

Alternative prior art solvent cleaning apparatus, particularly adapted for use with high boiling solvents, has an electrical heater for boiling the solvent, refluxing of the solvent being effected using a condenser to cool the solvent vapour, the condenser forming part of a refrigeration system including a compressor, a restrictor and the condenser.

Both forms of prior art solvent cleaning apparatus are effective in refluxing solvent, and during operation solvent losses have been found to be low. However, when the apparatus is shut-down, for example at night, it has been found that solvent losses can be unacceptably high due to failure to condense solvent vapour released from the hot solvent in the container. Solvent losses are increased by the solvent being maintained at relatively high temperatures for substantial periods of time due to the thermal insulation of the solvent container, such insulation being provided to improve the thermal efficiency of the apparatus during normal operation.

According to the present invention there is provided Solvent vapour cleaning apparatus having a container for solvent in which solvent is heated to effect vaporisation thereof during an operating mode of the apparatus, the apparatus including cooler means for effecting cooling of the solvent in said container during a shut-down mode of the apparatus following heating of the solvent during the operating mode.

Solvent cleaning apparatus in accordance with the invention preferably includes a heat pump for effecting heating of the solvent. However, cooling of the solvent in the shut-down mode can be effected in accordance with the invention in apparatus in which the solvent is heated electrically. When a heat pump is used, it is convenient for heater means of the pump used to effect heating of the solvent to be convertable into said cooler means by changing the flow of heat transfer medium within the pump. This change of flow will in general be effected so that high pressure heat transfer medium from the compressor of the heat pump, which in normal operation is passed to heater means for heating the solvent, is passed during shut-down to pressure reducing means which also effects cooling of the heat transfer medium, and the cooled medium is then passed to the heater means which then functions as said cooler means. This dual functioning of the heater means of the heat pump as cooler means during shut-down can be effected using valves which change the flow of the heat tansfer medium.

Apparatus in accordance with the invention will now be described, by way of example, with reference to the accompanying diagrammatic drawings in which:-

Figure 1 is a flow diagram of the heat transfer medium of the embodiment during normal operation, the flow direction being indicated by arrows, and

Figure 2 is the flow diagram of the embodiment of Figure 1 during shut-down, with flow direction again being indicated by arrows.

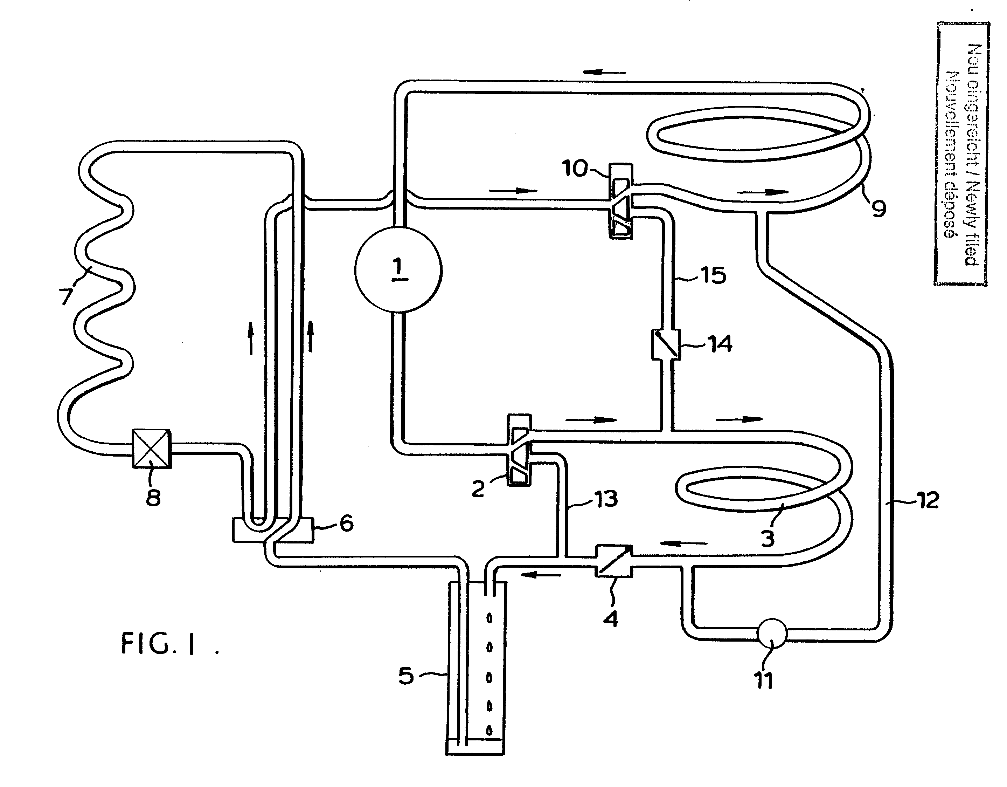

Referring to Figure 1, the apparatus has a compressor 1 which compresses and heats heat transfer medium which flows through a three-way reversing valve 2 to heating coils 3 disposed in a solvent tank (not shown) within the apparatus. The heat transfer medium leaving the heating coils 3 passes through a check valve 4 and thence to a gas/liquid separator 5 from which heat transfer medium, cooled somewhat by its passage through the heating coils 3, is fed via a reversing valve 6 through a condenser 7 to a flow restrictor 8.

Cold heat transfer medium leaving the restrictor 8 (cooled by pressure reduction) is passed via the reversing valve 6 to reflux coils 9 via three-way reversing valve 10. The reflux coils 9 condense solvent vapour generated by hot heat transfer medium heated by heating coils 3, condensed solvent being returned to the solvent tank and heat transfer medium being returned to the compressor 1.

During normal mode, a valve 11 in a conduit 12 between the reflux coils 9 and the heating coils 3 is closed.

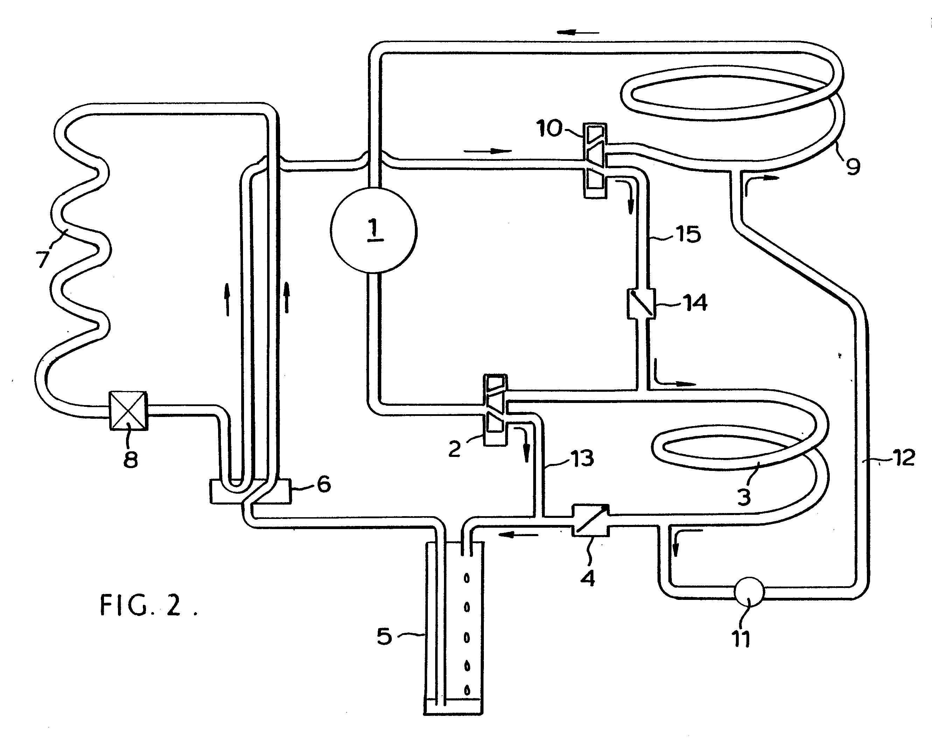

In shut-down mode, as shown in Figure 2, three-way valves 2 and 10 and the reversing valve 6 are all actuated to change the direction of heat transfer medium flow through them, and valve 11 in conduit 12 is opened.

Heat transfer medium from the compressor 1 now flows through valve 2 and conduit 13 to the separator 5, the medium being prevented from flowing to the heating coils 3 by the check valve 4. Hot heat transfer medium is then passed to the condenser 7 where it is cooled, and it is cooled further by reducing its pressure by passage through the flow restrictor 8. Cold heat transfer medium then flows via the reversing valve 6 and the three-way reversing valve 10 through a check valve 14 in a conduit 15, between the valve 10 and the heating coils 3, to the heating coils 3 where it serves to cool hot solvent surrounding the coils 3.

Check valve 4 prevents hot, high pressure heat transfer medium in conduit 13 from passing to the coils 3 which during shut-down will contain cold, low pressure heat transfer medium.

Heat transfer medium leaving the coils 3 passes via valve 11 and conduit 12 to reflux coils 9 where solvent vapour which is present around them is condensed. Finally the heat transfer medium from the coils 9 is returned to the compressor 1.

It has been found that by providing a shut-down mode of operation as described hereinbefore, it is possible to reduce substantially the losses of heat transfer medium compared with simply turning off the power supply to the apparatus. The temperature of the solvent in the solvent tank can be reduced from boiling to a value at which losses by evaporation are relatively insignificant compared with ambient temperature within minutes depending on the physical layout and dimensions of the apparatus, compared with hours hitherto. Furthermore, vapour reflux is continued during this shut-down mode of operation.

While the specific embodiment shown in Figures 1 and 2 is provided with three-way slide valves to effect changes in the direction of flow of heat transfer medium, it will be appreciated that other means of effecting such changes can be used, for example two solenoid valves can be used instead of one three-way valve. Alternatively, four-way slide valves can be used in place of the three-way valves.

## Claims

1. Solvent vapour cleaning apparatus having a container for solvent in which solvent is heated to effect vaporisation thereof during an operating mode of the apparatus, characterised in that the apparatus including cooler means (3) for effecting cooling of the solvent in said container during a shut-down mode of the apparatus following heating of the solvent during the operating mode.

2. Apparatus according to claim 1, including a heat pump (1, 3, 4, 5, 7, 8, 9) for effecting said heating of the solvent.

3. Apparatus according to claim 2, wherein the heat pump (1, 3, 4, 5, 7, 8, 9) includes heater means (3) for heating said solvent in said operating mode, the apparatus including control means (2, 6, 10, 11) for controlling the flow of heat transfer medium within the heat pump (1, 3, 4, 5, 7, 8, 9) when the apparatus is changed from operating mode to shut-down mode so that cold heat transfer medium is passed through said heater means (3) during shut-down mode.

4. Apparatus according to claim 2, wherein the heat pump comprises a compressor (1), heater means (3) for heating said solvent, cooling means (9) for cooling evaporated solvent, and restrictor means (8) for restricting the flow of heat transfer medium within the apparatus to cause expansion of the heat transfer medium, said heat transfer medium being arranged to flow during operation mode from the compressor (1) to the heater means (3), through the restrictor means (8), through the cooling means (9) and back to the compressor, the heatn pump further including flow diverter means (2, 6, 10, 11) for diverting heat transfer medium from the compressor (1) to the restrictor means (8) and thence to the heater means (3) so that during shut-down mode the heater means (3) is cooled whereby the heater means is converted to said cooler means (3), the flow diverter means (2, 6, 10, 11) further allowing heat exchange medium from the heater means (3) to flow to the cooling means (9) and thence back to the compressor (1) during said shut-down mode.

5. Apparatus according to claim 3, wherein the control means (2, 6, 10, 11) include slide valves.

6. Apparatus according to claim 1, including electrical heater means for heating the solvent in said container.

FIG. 1 .

FIG. 2.